(19) **Europäisches Patentamt European Patent Office Office européen des brevets**

(11) **EP 1 429 155 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
*G01S 17/46* (2006.01)     *G01S 17/58* (2006.01)

(21) Anmeldenummer: **02027867.7**

(22) Anmeldetag: **12.12.2002**

(54) **Verfahren zur Messung des Abstands eines an einer Referenzfläche vorbei gefürhrten Bauteils und Durchführung des Verfahrens**

Method for measuring the distance between a reference plane and a component moving along and carrying out the method

Procédé pour mesurer la distance entre un plan de référence et un composant se déplacant devant et mise en oeuvre du procédé

(84) Benannte Vertragsstaaten:
**DE ES FR GB IT**

(43) Veröffentlichungstag der Anmeldung:
**16.06.2004 Patentblatt 2004/25**

(73) Patentinhaber: **SIEMENS AKTIENGESELLSCHAFT 80333 München (DE)**

(72) Erfinder:
• **Lütsche, Jochen 14482 Postdam (DE)**
• **Pfeifer, Uwe, Dr. 12557 Berlin (DE)**

(56) Entgegenhaltungen:
**EP-A- 1 134 594      DE-A- 2 229 887
DE-A- 2 508 836      DE-A- 2 510 537
US-A- 4 630 927      US-B1- 6 211 506**

**Beschreibung**

Die Erfindung betrifft ein Verfahren zur Messung des Abstandes eines an einer Referenzfläche vorbei geführten Bauteils von der Referenzfläche, insbesondere zur Messung des Radialspalts bei rotierenden Turbinenschaufeln. Sie bezieht sich weiter auf ein Messsystem zur Durchführung des Verfahrens, insbesondere zur Anwendung bei der Radialspaltmessung in einer Turbine.

Turbinen werden in vielen Bereichen zum Antrieb von Generatoren oder von Arbeitsmaschinen eingesetzt. Dabei wird der Energieinhalt eines Strömungsmediums, beispielsweise eines durch Verbrennung eines Brennstoffs erzeugten Brenngases, zur Erzeugung einer Rotationsbewegung einer Turbinenwelle genutzt. Zur Erzeugung der Rotationsbewegung der Turbinenwelle sind dabei an dieser eine Anzahl von üblicherweise in Schaufelgruppen oder Schaufelreihen zusammengefassten Laufschaufeln angeordnet, die über einen Impulsübertrag aus dem Strömungsmedium die Turbinenwelle antreiben. Zur Führung des Strömungsmediums in der Turbineneinheit sind zudem üblicherweise zwischen benachbarten Laufschaufelreihen mit dem Turbinengehäuse verbundene Leitschaufelreihen angeordnet.

Neben einer Vielzahl weiterer Betriebsparameter ist beim Betrieb einer derartigen Turbine eine zuverlässige Überwachung des sogenannten Radialspalts von Bedeutung. Unter dem Radialspalt ist dabei der Abstand zwischen dem freien Ende einer jeden Laufschaufel und dem diese umgebenden Innengehäuse der Turbine zu verstehen. Einerseits ist es zur Erzielung eines besonders hohen Wirkungsgrades der Turbine ein Auslegungsziel, den Radialspalt so klein wie möglich zu halten, so dass das in der Turbine geführte Strömungsmedium unter Energieumsetzung durch die Laufschaufelreihen hindurch und nicht etwa ohne Energieübertrag durch den Radialspalt an der Laufschaufel vorbeiströmt. Andererseits ist es jedoch erforderlich, einen direkten Kontakt des Laufschaufelendes mit dem Innengehäuse der Gasturbine aus Gründen der Betriebssicherheit in jedem Fall zwingend auszuschließen. Dabei ist insbesondere zu beachten, dass gerade beim Einsatz in Gasturbinen auf Grund der dort möglicherweise vorherrschenden vergleichsweise hohen Arbeitstemperaturen von bis zu 1200 °C eine thermische Längendehnung der Laufschaufeln auftreten kann, die zu einer Verkleinerung des Radialspalts im Vergleich zum ruhend Zustand führt. Daher wird der Radialspalt in Turbinen üblicherweise regelmäßig oder zumindest stichprobenartig gemessen und überprüft.

Es ist daher wünschenswert, Konzepte zur Messung und Überwachung des Radialspalts in einer Turbine bereit zu stellen. Diese Konzepte sollten berührungslos ausgebildet sein, um den reibungslosen Ablauf der Turbine nicht zu beeinträchtigen. Zu derartigen Zwecken kommt als berührungsloses Konzept die sogenannte Triangulationsmessung in Betracht, bei der der Radialspalt oder im allgemeinen der Abstand eines an einer Referenzfläche vorbei geführten Bauteils von der Referenzfläche auf optischem Wege erfasst wird. Bei einer derartigen Triangulationsmessung werden zwei Lichtstrahlen von der Referenzfläche aus derart geneigt zueinander ausgesendet, dass sie sich in der Projektion der von der Bewegungsrichtung des Bauteils und der Normalen der Referenzfläche aufgespannten Ebene in einem Abstand von mehr als dem maximal zu erwartenden zu messenden Abstand hinter der Referenzfläche schneiden. In der genannten Projektion bildet der Strahlengang der Lichtstrahlen somit ein Dreieck mit einem Abschnitt der Referenzfläche als Basis, wobei der Strahlengang insbesondere derart gewählt sein kann, dass dieses Dreieck gleichschenklig ist. Die Messung erfolgt dabei dadurch, dass für jeden der Lichtstrahlen überwacht wird, ob das zu vermessende Bauteil, beispielsweise mit seiner Vorderkante, durch den jeweiligen Lichtstrahl hindurch tritt. Dies kann beispielsweise in der Art einer Lichtschranke oder über ein dem jeweiligen Lichtstrahl zugeordnetes Reflektionssignal gemessen werden.

Bei diesem Konzept ist es somit möglich, bei beiden Lichtstrahlen den Zeitpunkt zu ermitteln, zu dem das Bauteil den Strahlengang unterbricht oder in diesen eintritt. Bei bekannter Geometrie des Strahlengangs und bei bekannter Bewegungsgeschwindigkeit des Bauteils ist aus der gemessenen Zeitdifferenz des Durchtritts des Bauteils durch die Lichtstrahlen eine charakteristische Länge ermittelbar, die das Bauteil zwischen den Lichtstrahlen zurückgelegt hat, wobei auf Grund der Strahlenführung diese charakteristische Länge in einen Abstand des Bauteils von der Referenzfläche umrechenbar ist.

Der zuverlässige Einsatz eines derartigen Konzepts bei der Radialspaltmessung an Turbinen bedingt jedoch üblicherweise einen vergleichsweise hohen Kalibrieraufwand, wobei zudem die erreichbare Genauigkeit nur begrenzt ist. Darüber hinaus können beim Betrieb der Turbine auftretende Vibrationen die Messgenauigkeit erheblich beeinträchtigen, so dass die Zuverlässigkeit derartiger Systeme nur begrenzt ist.

Der Erfindung liegt daher die Aufgabe zugrunde, ein Verfahren zur Messung des Abstands eines an einer Referenzfläche vorbei geführten Bauteils von der Referenzfläche anzugeben, das mit besonders hoher Genauigkeit für einen Einsatz bei der Radialspaltmessung in der Turbine besonders geeignet ist. Des weiteren soll ein für die Durchführung des Verfahrens geeignetes System angegeben werden.

Bezüglich des Verfahrens wird diese Aufgabe erfindungsgemäß gelöst, indem zwei im Wesentlichen parallel zueinander gerichtete Lichtstrahlen sowie zumindest ein weiterer, zu den parallelen Lichtstrahlen in Bewegungsrichtung des Bauteils geneigter gerichteter Lichtstrahl auf ein jeweils zugeordnetes, auf das Bauteil zurückzuführendes Reflektionssignal hin überwacht werden, wobei anhand der Zeitdifferenz zwischen dem Eintreffen der den parallelen Lichtstrahlen zugeordneten Reflektionssignale einerseits und anhand der Zeitdifferenz zwischen dem Eintreffen der einem der parallelen Lichtstrahlen und dem geneigten Lichtstrahl oder von zwei geneigten Lichtstrahlen zugeordneten Reflektionssignalen andererseits ein für den Abstand charakteristischer Kennwert ermittelt wird.

Die Erfindung geht dabei von der Überlegung aus, dass das Verfahren zur Abstandsermittlung im besonderen Maße an die in einer Turbine möglicherweise vorherrschenden Randbedingungen angepasst sein sollte. Insbesondere sollte dabei der Möglichkeit Rechnung getragen werden, dass in Folge von Vibrationen oder sonstigen betrieblichen Schwankungen beim Betrieb der Turbine die lokale Geschwindigkeit der Turbinenschaufeln variieren kann. Beim Einsatz eines optischen, auf dem Triangulationskonzept beruhenden Messverfahrens sollte somit für eine besonders hohe Messgenauigkeit nicht von einer konstanten Bewegungsgeschwindigkeit der Turbinenschaufeln relativ zur Turbineninnenwand, also von einer konstanten Bewegungsgeschwindigkeit des Bauteils relativ zur Referenzfläche, ausgegangen werden. Vielmehr sollte das Messverfahren derart ausgelegt sein, dass auch Schwankungen in der Bewegungsgeschwindigkeit des Bauteils keine Verfälschung der Messergebnisse bewirken. Um dies zu ermöglichen, ist das im Wesentlichen auf einer Triangulationsmessung beruhende Messkonzept durch eine Referenzmessung ergänzt, die aktuell die tatsächliche Bewegungsgeschwindigkeit des Bauteils gegenüber der Referenzfläche ermittelt. Dazu werden die parallelen Lichtstrahlen herangezogen, die unabhängig vom Abstand des Bauteils von der Referenzfläche über eine Messung der Zeitpunkte des Durchtritts des Bauteils durch den jeweils zugeordneten Strahlengang einen Rückschluss auf die aktuelle Ist-Relativgeschwindigkeit des Bauteils gegenüber der Referenzfläche zulassen. Auf dieser Grundlage erfolgt sodann die Auswertung der Zeitdifferenzen, also die Umrechnung der aus den gegeneinander geneigten Lichtstrahlen ermittelten Zeitdifferenz in die durch das Bauteil zurückgelegte Wegstrecke.

Bei diesem Konzept, bei dem somit eine Triangulationsmessung durch eine Referenzmessung ergänzt ist, so dass die Ermittlung des Abstandskennwerts unter Berücksichtigung der tatsächlichen Bewegungsgeschwindigkeit des Bauteils erfolgt, kann auf drei, vier oder bedarfsweise auch mehr Lichtstrahlen zurückgegriffen werden. Bei der Verwendung von drei Lichtstrahlen sind zwei dieser Lichtstrahlen parallel zueinander ausgerichtet, so dass der Durchtritt des Bauteils durch diese Lichtstrahlen unabhängig vom Abstand zur Referenzfläche eine für die aktuelle Bewegungsgeschwindigkeit des Bauteils charakteristische Zeitdifferenz liefert. Der dritte Lichtstrahl ist dabei geneigt zu den Parallelen Lichtstrahlen ausgerichtet, so dass dieser Lichtstrahl in Kombination mit einem der beiden parallelen Lichtstrahlen in der Art einer herkömmlichen Triangulationsmessung genutzt werden kann. Bei der Verwendung von vier Lichtstrahlen kann die Referenzmessung mit zwei parallel ausgerichteten Lichtstrahlen vorgenommen werden, wobei die beiden weiteren Lichtstrahlen in der Art einer herkömmlichen Triangulationsmessung zueinander geneigt ausgerichtet sein können.

Das Messverfahren bietet insbesondere die Möglichkeit, unabhängig von möglicherweise auftretenden Vibrationen oder auch Schwankungen in der aktuellen Bewegungsgeschwindigkeit des Bauteils korrekte Kennwerte für den jeweiligen Abstand des Bauteils von der Referenzfläche zu liefern. Vorteilhafterweise wird dies bei der Auswertung unter völligem Verzicht auf die Berücksichtigung einer erwarteten Bewegungsgeschwindigkeit des Bauteils genutzt, indem der für den Abstand charakteristische Kennwert anhand des Verhältnisses der Zeitdifferenzen ermittelt wird.

Um die zuverlässige Bestimmung der auszuwertenden Zeitdifferenzen zu ermöglichen, ist das Messverfahren in weiterer vorteilhafter Ausgestaltung für eine zuverlässige Zuordnung der auf das Bauteil zurückzuführenden Reflektionssignale zu den einzelnen Lichtstrahlen ausgestaltet. Dazu wird für die Lichtstrahlen vorteilhafterweise jeweils Licht unterschiedlicher Wellenlänge genutzt, so dass über eine wellenlängenselektive Auswertung der Reflektionssignaleeine eindeutige Zuordnung jedes Reflektionssignals zu einem der Lichtstrahlen möglich ist.

Bezüglich des Messsystems wird die genannte Aufgabe gelöst mit einer Lichtquelle zur Erzeugung von zumindest zwei im Wesentlichen parallel zueinander gerichteten Lichtstrahlen und von zumindest einem weiteren, zu den parallelen Lichtstrahlen in Bewegungsrichtung des Bauteils geneigt gerichteten Lichtstrahl, und mit einem Detektor zur Erfassung von den Lichtstrahlen jeweils zugeordneten, auf das Bauteil zurückzuführenden Reflektionssignalen, wobei dem Detektor eine Auswerteinheit zur Ermittlung eines Abstandskennwerts anhand der Zeitdifferenz zwischen dem Eintreffen der den parallelen Lichtstrahlen zugeordneten Reflektionssignale einerseits und anhand der Zeitdifferenz zwischen dem Eintreffen der einem der parallelen Lichtstrahlen und dem geneigten Lichtstrahl oder von zwei geneigten Lichtstrahlen zugeordneten Reflektionssignalen andererseits zugeordnet ist.

Das Messsystem ist dabei zweckmäßigerweise derart ausgestaltet, dass die Auswerteeinheit den Abstandskennwert anhand des Verhältnisses der Zeitdifferenzen ermittelt. Um weiterhin eine zuverlässige Zuordnung der Reflektionssignale zu den Lichtstrahlen zu ermöglichen, umfasst in alternativer oder zusätzlicher vorteilhafter Weiterbildung die Lichtquelle eine der Anzahl der Lichtstrahlen entsprechende Anzahl von Lichterzeugern, die sich hinsichtlich der Wellenlänge des von ihnen jeweils erzeugten Lichts voneinander unterscheiden.

Um das Messsystem auch in vergleichsweise widrigen Umgebungsbedingungen und an schwer zugänglichen Orten wie beispielsweise bei der Radialspaltüberwachung in einer Turbine einsetzen zu können, sind vorteilhafterweise die Funktionskomponenten wie beispielsweise Lichtquellen und Detektoren räumlich vom eigentlichen Einsatzort, also insbesondere von der Referenzfläche, entkoppelt. Um dies zu ermöglichen, ist die Lichtquelle vorteilhafterweise über ein Lichtwellenleitersystem mit einem in der Referenzfläche angeordneten Lichtausund -eintritt verbunden. In weiterer vorteilhafter Ausgestaltung ist der Detektor dabei ebenfalls über das Lichtwellenleitersystem mit dem Lichtaus- und -eintritt verbunden.

Um gerade bei der Verwendung eines derartigen Lichtwellenleitersystems auf besonders einfache Weise einerseits die beiden parallel zueinander ausgerichteten Lichtstrahlen und anderseits die geneigt dazu ausgerichteten Lichtstrahlen bereitstellen zu können, ist das Lichtwellenleitersystem in weiterer vorteilhafter Ausgestaltung im Bereich des Lichtaus- und - eintritts teilweise mit einer Linsenanordnung, insbesondere mit einer Konvexen Linse, versehen.

Vorteilhafterweise weist das Lichtwellenleitersystem eine der Anzahl der Lichtstrahlen entsprechende Anzahl von innerhalb eines gemeinsamen Mantels angeordneten optischen Fasern auf.

Vorteilhafterweise wird das Messsystem zur Überwachung des Radialspalts in einer Turbine eingesetzt.

Die mit der Erfindung erzielten Vorteile bestehen insbesondere darin, dass die Kombination einer Abstandsmessung nach dem Triangulationsprinzip mit einer Referenzmessung die Ermittlung eines Abstandskennwertes für das an der Referenzfläche vorbei geführte Bauteil auch bei schwankender oder variierender Bewegungsgeschwindigkeit des Bauteils mit hoher Genauigkeit ermöglicht. Das Verfahren und das zur Durchführung des Verfahrens vorgesehene Messsystem sind somit zum Einsatz bei der Radialspaltüberwachung in einer Turbine besonders geeignet.

Des Weiteren ist das Messsystem auf Grund des optischen Messprinzips in sämtlichen für den Einsatz bei der Überwachung des Radialspalts in einer Turbine relevanten Temperaturen von beispielsweise 0 °C bis 450 °C mit gleichermaßen hoher Genauigkeit einsetzbar. Durch die Verwendung des Lichtwellenleiters bei der optischen Ankopplung von Lichtquelle und Detektor an die Referenzfläche ist im Bereich der Referenzfläche eine besonders kompakte Bauweise des Messsystems erreichbar, so dass auch in vergleichsweise komplexen mechanischen Systemen unter Rückgriff auf standardisierte Bohrungen mit einem Außendurchmesser von beispielsweise maximal 7,2 mm ein uneingeschränkter Einsatz ermöglicht ist. Aufgrund der Berücksichtigung der Referenzmessung ist zudem ein weitgehend kalibrationsfreier Einsatz des Messsystems auch bei vergleichsweise langer Betriebsdauer ermöglicht, wobei für eine zuverlässige Messwertermittlung lediglich bei der erstmaligen Inbetriebnahme eine Kalibrierung zur Ermittlung der genauen Lichtstrahlgeometrie erforderlich ist. Sobald die Lichtstrahlgeometrie ermittelt ist, ist eine weitere Nachführung charakteristischer Betriebsparameter für das Messsystem nicht mehr erforderlich.

Ein Ausführungsbeispiel der Erfindung wird anhand einer Zeichnung näher erläutert. Daran zeigen:

FIG 1 schematisch ein Messsystem zur Ermittlung des Abstands eines an einer Referenzfläche vorbei geführten Bauteils von der Referenzfläche,

FIG 2 eine alternative Ausführungsform des Messsystems nach FIG 1,

FIG 3 einen Messkopf des Messsystems nach FIG 1 oder 2 in Aufsicht, und

FIG 4 ein Strahlsystem mit optischen Fasern des Messkopfs nach FIG 3 in Aufsicht.

Gleiche Teile sind in allen Figuren mit den selben Bezugszeichen versehen.

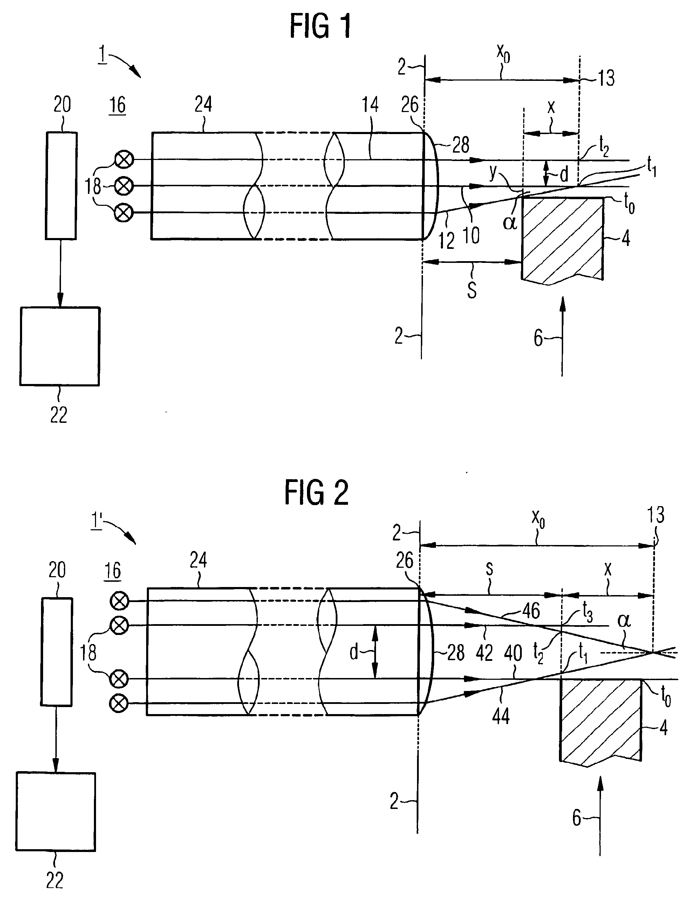

Das Messsystem 1 nach FIG 1 ist zur Ermittlung des Abstands s eines an einer Referenzfläche 2 vorbeigeführten Bauteils 4 von der Referenzfläche 2 vorgesehen. Beim Bauteil 4, dessen Bewegungsrichtung im Wesentlichen parallel zur Erstreckungsebene der Referenzfläche 2 ausgerichtet und durch den Pfeil 6 angedeutet ist, handelt es sich dabei insbesondere um eine Laufschaufel in einer nicht näher dargestellten Turbine, wobei es sich bei der Referenzfläche 2 beispielsweise um eine Innenauskleidung in der Turbine handelt. In diesem Fall dient das Messsystem 1 somit zur Radialspaltüberwachung in der Turbine, wobei der Abstand s gleich dem Radialspalt der Turbine ist.

Grundsätzlich beruht das Messsystem 1 auf der Anwendung des sogenannten Triangulationsprinzips. Dabei werden im Ausführungsbeispiel nach FIG 1 ein erster Lichtstrahl 10 und ein zweiter Lichtstrahl 12 verwendet, wobei der zweite Lichtstrahl 12 in Bewegungsrichtung des Bauteils 4 gesehen gegenüber dem ersten Lichtstrahl 10 geneigt ausgerichtet ist. In der in FIG 1 gezeigten Projektion schneiden sich die Lichtstrahlen 10, 12 somit in der Fokusebene 13. Der Abstand $x_0$ der Fokusebene 13 von der Referenzfläche 2 gibt dabei den maximal möglichen Messbereich vor, innerhalb dessen der Abstand s ermittelbar ist.

Zur Ermittlung des Abstands s werden die Lichtstrahlen 10, 12 auf das Auftreten eines auf das Bauteil 4 zurückzuführenden Reflektionssignals hin überwacht. Sobald nämlich das Bauteil 4 auf Grund seiner Bewegung in den Strahlengang des Lichtstrahls 10 bzw. 12 eintritt, wird der jeweilige Lichtstrahl 10 bzw. 12 durch das Bauteil 4 reflektiert, wobei das dadurch erzeugte Reflektionssignal detektierbar ist. In der Art einer Lichtschranke ist somit der Zeitpunkt ermittelbar, zu dem das Bauteil 4 den Strahlengang des jeweiligen Lichtstrahls 10, 12 durchtritt. In FIG 1 ist dabei derjenige Moment gezeigt, zu dem das Bauteil 4 in seiner Bewegungsrichtung gesehen den ersten Lichtstrahl, nämlich den Lichtstrahl 12, durchtritt. Dieser Zeitpunkt ist in FIG 1 mit $t_0$ angedeutet.

Infolge der weiteren Bewegung des Bauteils 4 durchtritt dieses mit seiner Vorderkante zu einem späteren Zeitpunkt $t_1$ den Strahlengang des Lichtstrahls 10. Zwischen den Zeitpunkten $t_1$ und $t_0$ hat das Bauteil 4 somit die Strecke y durchlaufen. Zur Ermittlung eines Kennwertes für den Abstand s kann nunmehr darauf zurückgegriffen werden, dass die vom Bauteil 4 zurückgelegte Strecke y gegeben ist durch

$$y = v \cdot (t_1 - t_0)$$

wobei v die Bewegungsgeschwindigkeit des Bauteils 4 ist. Bei bekanntem Neigungswinkel $\alpha$ des Lichtstrahls 12 gegenüber dem Lichtstrahl 10 ergibt sich somit (bei vorliegend senkrechtem Einfall des Lichtstrahls 10 auf das Bauteil 4) der Abstand x der Vorderseite des Bauteils 4 zur Fokusebene 13 durch

$$x = \frac{v \cdot (t_1 - t_0)}{\tan \alpha}$$

Bei bekannter Geometrie ist somit ein für den Abstand s charakteristischer Kennwert ermittelbar durch die Zeitdifferenz $t_1$-$t_0$, wobei auf die Beziehung

$$s = x_0 - \frac{v \cdot (t_1 - t_0)}{\tan \alpha}$$

zurückgegriffen kann.

Bei einem derartigen allgemeinen Triangulationsprinzip besteht jedoch der Nachteil, dass die Auswertung direkt abhängig ist von der Bewegungsgeschwindigkeit v des Bauteils 4. Gerade in diesem Fall, in dem in diesem Parameter Schwankungen auftreten können, liefert ein derartiges Konzept somit nur begrenzte Genauigkeit. Das Messsystem 1 ist nunmehr dafür ausgelegt, derartige Ungenauigkeiten zu kompensieren, so dass insbesondere auch ein Einsatz bei der Radialspaltmessung in einer Turbine mit besonders hoher Genauigkeit ermöglicht ist. Dazu ist im Messsystem 1 die Triangulationsmessung durch eine Referenzmessung ergänzt, die eine Bestimmung des Abstands s unabhängig von der tatsächlichen Bewegungsgeschwindigkeit v des Bauteils 4 ermöglicht.

Zu diesem Zweck ist ein weiterer Lichtstrahl 14 vorgesehen, der im Wesentlichen parallel zum erstgenannten Lichtstrahl 10 ausgerichtet ist. Dieser Lichtstrahl 14 ist im Ausführungsbeispiel nach FIG 1 in Bewegungsrichtung des Bauteils 4 gesehen in einer Position hinter den Lichtstrahlen 10, 12 angeordnet. Selbstverständlich ist hierbei jedoch auch eine beliebige andere räumliche Anordnung möglich. Das Messsystem 1 umfaßt somit einerseits einen durch die Lichtstrahlen 10, 12 gebildeten konvergenten Strahlengang und andererseits einen durch einen der Lichtstrahlen 10, 12 und den Lichtstrahl 14 gebildeten koaxialen Strahlengang.

Im in FIG 1 gezeigten Ausführungsbeispiel durchtritt die Vorderkante des Bauteils 4 somit zum Zeitpunkt $t_2$ den Lichtstrahl 14, so dass zu diesem Zeitpunkt ein dem Lichtstrahl 14 zugeordnetes Reflektionssignal detektierbar ist. Auf Grund der parallelen Strahlführung der Lichtstrahlen 10, 14 ist die (messbare) Zeitdifferenz $t_2$-$t_1$ zwischen den dem Lichtstrahl 10 und dem Lichtstahl 14 zugeordneten Reflektionssignalen gegeben durch

$$t_2 - t_1 = \frac{d}{v}$$

wobei d der Abstand der Lichtstrahlen 14, 10 voneinander in Bewegungsrichtung des Bauteils 4 gesehen ist. Somit ist über die Zeitdifferenz $t_2$-$t_1$ eine Ermittlung des Abstands s über

$$s = x_0 - \frac{d}{\tan \alpha} \cdot \frac{t_1 - t_0}{t_2 - t_1}$$

und somit ohne Berücksichtigung eines Schätzwertes für die Bewegungsgeschwindigkeit v des Bauteils 4 möglich.

Zur Erzeugung der Lichtstrahlen 10, 12, 14 umfasst das Messsystem 1 eine Lichtquelle 16, die eine Anzahl von Lichterzeugern 18 aufweist. Dabei ist jeder Lichterzeuger 18 jeweils einem der Lichtstrahlen 10, 12, 14 zugeordnet. Des Weiteren umfasst das Messsystem 1 eine Detektoreinheit 20, die mit einer Auswerteeinheit 22 verbunden ist. Die Detektoreinheit 20 ermittelt dabei den Zeitpunkt des Eintreffens eines auf das Bauteil 4 zurückzuführenden Reflektionssignals. Das Reflektionssignal wird dabei durch Reflektionen eines der Lichtstrahlen 10, 12, 14 an der Oberfläche des Bauteils 4 erzeugt, so dass der Zeitpunkt des Nachweises eines Reflektionssignals dem Zeitpunkt des Eintritts des Bauteils 4 in den jeweils zugeordneten Lichtstrahl 10, 12, 14 entspricht.

Für eine Zuordnung einzelner Reflektionssignale zu einzelnen der Lichtstrahlen 10, 12, 14 sind die Lichterzeuger 18 zur Erzeugung von Licht mit jeweils unterschiedlicher Wellenlänge ausgelegt, wobei der Detektor 20 zur wellenlängenselektiven Auswertung empfangener Signale ausgestaltet ist. Damit ist im Detektor 20 eine Zuordnung einzelner Reflektionssignale zu einzelnen Lichtstrahlen 10, 12, 14 möglich, so dass jederzeit derjenige Zeitpunkt ermittelbar ist, zu dem das Bauteil 4 in den jeweiligen Lichtstrahl 10, 12 bzw. 14 eintritt. Die

solchermaßen erhaltenen, lichtstrahlspezifischen Zeitkennwerte werden an die Auswerteeinheit 22 übergeben, in der unter Zugrundelegung der bekannten Geometriewerte ein charakteristischer Kennwert für den Abstand s ermittelt wird.

Um einen Einsatz des Messsystems 1 auch an vergleichsweise unzugänglichen Orten und in widriger Umgebung wie beispielsweise bei der Radialspaltmessung einer Turbine zu ermöglichen, sind die aktiven Komponenten wie beispielsweise die Lichtquelle 16 und der Detektor 20 räumlich von der Referenzfläche 2 entkoppelt. Dazu sind die Lichtquelle 16 und der Detektor 20 über ein Lichtwellenleitersystem 24 mit einem in der Referenzfläche 2 angeordneten Licht aus- und -eintritt 26 verbunden. Das Lichtwellenleitersystem 24 ist dabei im Bereich des Licht aus- und -eintritt 26 derart ausgestaltet, dass einerseits ein Austritt der Lichtstrahlen 10, 14 im Wesentlichen parallel zueinander und andererseits ein Austritt des Lichtstrahls 12 im Wesentlichen geneigt zu den Lichtstrahlen 10, 14 ermöglicht ist. Dazu ist das Lichtwellenleitersystem 24 im Bereich des Lichtaus- und -eintritts 26 teilweise mit einer Linsenanordnung 28 versehen, die die Lichtstrahlen 10, 14 im Wesentlichen gradlinig passieren lässt und lediglich den Lichtstrahl 12 beugt.

Im Ausführungsbeispiel nach FIG 1 ist somit die Kombination eines Triangulationsmesskonzepts mit einer Referenzmessung unter Verwendung von insgesamt drei Lichtstrahlen 10, 12, 14 gezeigt, wobei in diesem Ausführungsbeispiel der Lichtstrahl 10 sowohl bei der Triangulationsmessung als auch bei der Referenzmessung herangezogen wird. In einem alternativen Ausführungsbeispiel nach FIG 2 ist im Messsystem 1' zwar auch eine Kombination einer Triangulationsmessung mit einer Referenzmessung vorgesehen, wobei für diese beiden Messungen jedoch vollständig unterschiedliche Lichtstrahlen vorgesehen sind. Im Ausführungsbeispiel nach FIG 2 sind somit vier Lichtstrahlen vorgesehen, wobei zwei im Wesentlichen parallel zueinander ausgerichtete Lichtstrahlen 40, 42 zur Durchführung der Referenzmessung und zwei in Bewegungsrichtung des Bauteils 4 gesehen zu den Lichtstrahlen 40, 42 geneigte Lichtstrahlen 44, 46 zur Durchführung der Triangulationsmessung vorgesehen sind. Das Messsystem 1' umfaßt somit einerseits einen durch die Lichtstrahlen 44, 46 gebildeten bikonvergenten Strahlengang und andererseits einen durch die Lichtstrahlen 40, 42 gebildeten koaxialen Strahlengang.

Wie in FIG 2 angedeutet, durchtritt die Vorderkante des Bauteils 4 zum Zeitpunkt $t_0$ den Strahlengang des Lichtstrahls 40, zum Zeitpunkt $t_1$ den Strahlengang des Lichtstrahls 44, zum Zeitpunkt $t_2$ den Strahlengang des Lichtstrahls 46, und zum Zeitpunkt $t_3$ den Strahlen-gang des Lichtstrahls 42. Selbstverständlich kann auch hier die tatsächliche Abfolge dieser Zeitpunkte und auch die räumliche Positionierung der Lichtstrahlen 40, 42, 44, 46 relativ zueinander variieren.

Beim in FIG 2 dargestellten Aufbau des Messsystems 1' lässt sich der für den Abstand s charakteristische Kennwert somit ermitteln nach der Beziehung

$$ S = x_0 - \frac{d}{2 \cdot \tan \alpha} \cdot \frac{t_2 - t_1}{t_3 - t_0} $$

Beim Ausführungsbeispiel nach FIG 2 ist die Linsenanordnung 28 selbstverständlich derart ausgebildet, dass ein im Wesentlichen geradliniger Durchtritt der Lichtstrahlen 40, 42 durch die Referenzfläche 2 ermöglicht ist, wobei die Lichtstrahlen 44, 46 entsprechend gebeugt werden.

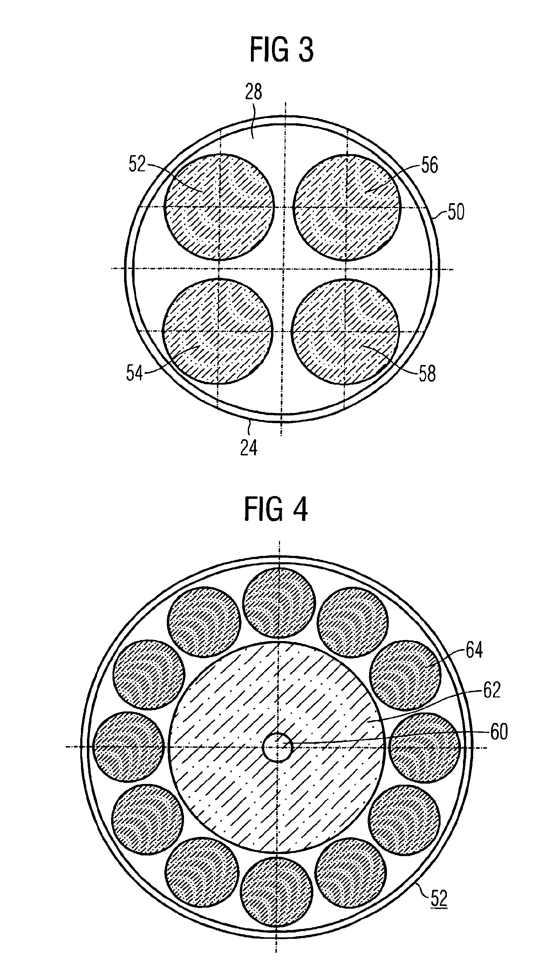

In FIG 3 ist ein Beispiel für den Austrittsbereich des Lichtwellenleitersystems 24 in der Referenzfläche 2 in Aufsicht gezeigt. In diesem Ausführungsbeispiel ist innerhalb eines gemeinsamen Mantels 50 eine der Anzahl der Lichtstrahlen entsprechende Anzahl von Strahlsystemen 52, 54, 56, 58 mit optischen Fasern angeordnet. Die Strahlsysteme 52, 54 sind dabei zur Weiterleitung der für die Triangulationsmessung bestimmten Lichtstrahlen vorgesehen. Dementsprechend sind sie in ihrem Austrittsbereich von der Linsenanordnung 28 überdeckt, die in diesem Bereich als konvexe Linse ausgestaltet ist. Im Gegensatz dazu sind die Strahlsysteme 56, 58 zur Weiterleitung der für die Referenzmessung vorgesehenen Lichtstrahlen ausgestaltet und in ihrem Austrittsbereich für einen im Wesentlichen geradlinigen Austritt der jeweiligen Lichtstrahlen ausgestaltet.

Der Aufbau eines einzelnen Strahlsystems 52 ist in FIG 4 dargestellt. Im Zentralbereich des Strahlsystems 52 ist dabei eine aktive Faser 60 angeordnet, die von einem Faserkollimator.62 umgeben ist. Im Außenbereich ist hingegen eine Anzahl passiver Fasern 64 mit oder ohne jeweils zugeordnetem Kollimator angeordnet.

**Patentansprüche**

1. Verfahren zur Messung des Abstands (s) eines an einer Referenzfläche (2) vorbei geführten Bauteils (4) von der Referenzfläche (2), bei dem zwei im We-sentlichen parallel zueinander gerichtete Lichtstrah-len (10, 14, 40, 42) sowie zumindest ein weiterer, zu den parallelen Lichtstrahlen (10, 14, 40, 42) in Bewegungsrichtung des Bauteils (4) geneigt gerichteter Lichtstrahl (12, 44, 46) auf ein jeweils zugeordnetes, auf das Bauteil (4) zurückzuführendes Reflektionssignal hin überwacht werden, wobei anhand der Zeitdifferenz ($t_2$-$t_1$) zwischen dem Eintreffen der den parallelen Lichtstrahlen (10, 14, 40, 42) zugeordneten Reflektionssignale einerseits und anhand der Zeitdifferenz ($t_1$-$t_0$) zwischen dem Eintreffen der einem der parallelen Lichtstrahlen (10, 14, 40, 42) und dem geneigten Lichtstrahl (12, 44, 46) oder von zwei geneigten Lichtstrahlen (12, 44, 46) zugeordneten Reflektionssignale andererseits ein für den Abstand (s) charakteristischer Kennwert ermittelt wird.

2. Verfahren nach Anspruch 1, bei dem der für den Abstand (s) charakteristische Kennwert anhand des Verhältnisses der Zeitdifferenzen $(t_2-t_1, t_1-t_0)$ ermittelt wird.

3. Verfahren nach Anspruch 1 oder 2, bei dem für die Lichtstrahlen (10, 12, 14, 40, 42, 44, 46) jeweils Licht unterschiedlicher Wellenlänge genutzt wird.

4. Messsystem (1, 1') zur Durchführung des Verfahrens nach einem der Ansprüche 1 bis 3 mit einer Lichtquelle (16) zur Erzeugung von zumindest zwei im Wesentlichen parallel zueinander gerichteten Lichtstrahlen (10, 14, 40, 42) und von zumindest einem weiteren, zu den parallelen Lichtstrahlen (10, 14, 40, 42) in Bewegungsrichtung des Bauteils (4) geneigt gerichteten Lichtstrahl (12, 44, 46) und mit einem Detektor (20) zur Erfassung von den Lichtstrahlen (10, 12, 40, 42, 44, 46) jeweils zugeordneten, auf das Bauteil (4) zurückzuführenden Reflektionssignalen, wobei dem Detektor (20) eine Auswerteeinheit (22) zur Ermittlung eines Abstandskennwerts anhand der Zeitdifferenz $(t_2-t_1)$ zwischen dem Eintreffen der den parallelen Lichtstrahlen (10, 14, 40, 42) zugeordneten Reflektionssignale einerseits und anhand der Zeitdifferenz $(t_1-t_0)$ zwischen dem Eintreffen der einem der parallelen Lichtstrahlen (10, 14, 40, 42) und dem geneigten Lichtstrahl (12, 44, 46) oder von zwei geneigten Lichtstrahlen (12, 44, 46) zugeordneten Reflektionssignale andererseits zugeordnet ist.

5. Messsystem (1, 1') nach Anspruch 4, dessen Auswerteeinheit (22) den Abstandskennwert anhand des Verhältnisses der Zeitdifferenzen $(t_2-t_1, t_1-t_0)$ ermittelt.

6. Messsystem (1, 1') nach Anspruch 4 oder 5, dessen Lichtquelle (16) eine der Anzahl der Lichtstrahlen (10, 12, 40, 42, 44, 46) entsprechende Anzahl von Lichterzeugern (18) umfasst, die sich hinsichtlich der Wellenlänge des von ihnen jeweils erzeugten Lichts voneinander unterscheiden.

7. Messsystem (1, 1') nach einem der Ansprüche 4 bis 6, dessen Lichtquelle (16) über ein Lichtwellenleitersystem (24) mit einem in der Referenzfläche (2) angeordneten Lichtaus- und -eintritt (26) verbunden ist.

8. Messsystem (1, 1') nach Anspruch 7, dessen Detektor (20) ebenfalls über das Lichtwellenleitersystem (24) mit dem Lichtaus- und -eintritt (26) verbunden ist.

9. Messsystem (1, 1') nach Anspruch 7 oder 8, dessen Lichtwellenleitersystem (24) im Bereich des Lichtaus- und eintritts (26) teilweise mit einer Linsenanordnung (28), insbesondere mit einer konvexen Linse, versehen ist.

10. Messsystem (1, 1') nach einem der Ansprüche 7 bis 9, dessen Lichtwellenleitersystem (24) eine der Anzahl der Lichtstrahlen (10, 12, 40, 42, 44, 46) entsprechende Anzahl von innerhalb eines gemeinsamen Mantels (50) angeordneten Strahlsystemen (52, 54, 56, 58) aufweist.

11. Verwendung eines Messsystems (1, 1') nach einem der Ansprüche 4 bis 10 zur Überwachung des Radialspalts in einer Turbine.

**Claims**

1. Method for measurement of the distance (s) between a component (4) which is moved past a reference surface (2) and that reference surface (2), in which two light beams (10, 14, 40, 42) which are aligned essentially parallel to one another as well as at least one further light beam (12, 44, 46) which is aligned at an angle to the parallel light beams (10, 14, 40, 42) in the movement direction of the component (4) are monitored for a respectively associated reflection system which is caused by the component (4), with the time difference $(t_2-t_1)$ between the arrival of the reflection systems which are associated with the parallel light beams (10, 14, 40, 42) on the one hand and the time difference $(t_1-t_0)$ between the arrival of the reflection systems which are associated with one of the parallel light beams (10, 14, 40, 42) and the angled light beam (12, 44, 46) or two angled light beams (12, 44, 46) on the other hand, being used to determine a characteristic value for the distance (s).

2. Method according to Claim 1, in which the characteristic value for the distance (s) is determined from the ratio of the time differences $(t_2-t_1, t_1-t_0)$.

3. Method according to Claims 1 and 2, in which light at a different wavelength is used for each of the light beams (10, 12, 14, 40, 42, 44, 46).

4. Measurement system (1, 1') for carrying out the method according to one of Claims 1 to 3, having a light source (16) for production of at least two light beams (10, 14, 40, 42) which are aligned essentially parallel to one another, and at least one further light beam (12, 44, 46), which is aligned at an angle to the parallel light beams (10, 14, 40, 42) in the movement direction of the component (4), and having a detector (20) for detection of reflection systems which are associated with each of the light beams (10, 12, 40, 42, 44, 46) and are caused by the component (4), with the detector (20) having an associated evaluation unit (22) for determination of a distance characteristic value from the time difference ($t_2$-$t_1$) between the arrival of the reflection systems which are associated with the parallel light beams (10, 14, 40, 42) on the one hand, and from the time difference ($t_1$-$t_0$) between the arrival of the reflection systems which are associated with one of the parallel light beams (10, 14, 40, 42) and the angled light beam (12, 44, 46) or two angled light beams (12, 44, 46), on the other hand.

5. Measurement system (1, 1') according to Claim 4, whose evaluation unit (22) determines the distance characteristic value from the ratio of the time differences ($t_2$-$t_1$, $t_1$-$t_0$) .

6. Measurement system (1, 1') according to Claim 4 or 5, whose light source (16) has a number of light generators (18) corresponding to the number of light beams (10, 12, 40, 42, 44, 46), and these light generators differ from one another in the wavelength of the light which is in each case produced by them.

7. Measurement system (1, 1') according to one of Claims 4 to 6, whose light source (16) is connected via an optical waveguide system (24) to a light outlet and inlet (26) which is arranged in the reference surface (2).

8. Measurement system (1, 1') according to Claim 7, whose detector (20) is likewise connected via the optical waveguide system (24) to the light outlet and inlet (26).

9. Measurement system (1, 1') according to Claim 7 or 8, whose optical waveguide system (24) is provided in places with a lens arrangement (28), in particular with a convex lens, in the area of the light outlet and inlet (26).

10. Measurement system (1, 1') according to one of Claims 7 to 9, whose optical waveguide system (24) has a number of beam systems (52, 54, 56, 58), which are arranged within a common casing (50), corresponding to the number of light beams (10, 12, 40, 42, 44, 46).

11. Use of a measurement system (1, 1') according to one of Claims 4 to 10 for monitoring the radial gap in a turbine.

**Revendications**

1. Procédé de mesure de la distance ( s ) à une surface ( 2 ) de référence d'un élément ( 4 ) qui passe devant la surface ( 2 ) de référence, dans lequel on contrôle deux faisceaux ( 10, 14, 40, 42 ) lumineux dirigés sensiblement parallèlement l'un à l'autre, ainsi qu'au moins un autre faisceau ( 12, 44, 46 ) lumineux incliné dans la direction de déplacement de l'élément ( 4 ) par rapport aux faisceaux ( 10, 14, 40,42 ) lumineux parallèles en ce qui concerne un signal de réflexion associé respectivement et revenant sur l'élément ( 4 ), en déterminant au moins une valeur caractéristique de la distance ( s ) au moyen de la différence ( t1-t0 ) de temps entre l'incidence des signaux de réflexion associés aux faisceaux ( 10, 14, 40, 42 ) lumineux parallèles d'une part et au moyen de la différence ( t1-t0) de temps entre l'incidence des signaux de réflexion associés à l'un des faisceaux ( 10, 14, 40, 42 ) lumineux parallèles et au faisceau ( 12, 44, 46 ) lumineux incliné ou aux deux faisceaux ( 12, 44, 46 ) lumineux inclinés d'autre part.

2. Procédé suivant la revendication 1, dans lequel on détermine pour la distance ( s ) une valeur caractéristique au moyen du rapport des différences ( t2 -t1, t1-t0 ) de temps.

3. Procédé suivant la revendication 1 ou 2, dans lequel on utilise pour les faisceaux ( 10, 12, 14, 40,42, 44, 46 ) lumineux respectivement de la lumière de longueur d'onde différente.

4. Système ( 1, 1' ) de mesure pour effectuer les procédés suivant les revendications 1 à 3 comprenant une source ( 16 ) lumineuse pour la production d'au moins deux faisceaux ( 10, 14, 40, 42 ) lumineux dirigés sensiblement parallèlement l'un à l'autre et d'au moins un autre faisceau ( 12, 44, 46 ) lumineux incliné dans la direction de déplacement d'élément ( 4 ) par rapport aux faisceaux ( 10, 14, 40, 42 ) lumineux parallèles et un détecteur ( 20 ) pour la détection de signaux de réflexion associé respectivement aux faisceaux ( 10, 12, 40, 42, 44, 46 ) lumineux et revenant sur l'élément ( 4 ), une unité ( 22 ) d'exploitation étant associée au détecteur ( 20 ) pour la détermination d'une valeur caractéristique de distance, au moyen de la différence ( t2-t1 ) de temps entre l'incidence des signaux de réflexion associés aux faisceaux ( 10, 14, 40, 42 ) lumineux parallèles d'une part et au moyen de la différence ( t1-t0 ) de temps entre l'incidence des signaux de réflexion associés à l'un des faisceaux ( 10, 14, 40, 42 ) lumineux parallèle et au faisceau ( 12, 44, 46 ) lumineux incliné ou à deux faisceaux ( 12, 44, 46 ) lumineux inclinés.

5. Système ( 1, 1' ) de mesure suivant la revendication 4, dans l'unité ( 22 ) d'exploitation détermine la valeur caractéristique de la distance au moyen du rapport des différence ( t2-t1, t1-t0 ) de temps.

6. Système ( 1, 1' ) de mesure suivant la revendication 4 ou 5, dont la source ( 16 ) lumineuse comprend un nombre de sources ( 18 ) de lumière correspondant au nombre des faisceaux ( 10, 12, 40, 42, 44, 46 ) lumineux qui se distinguent les unes des autres par la longueur d'onde de la lumière qu'elles produisent respectivement.

**7.** Système ( 1, 1' ) de mesure suivant l'une des revendications 4 à 6, dont la source ( 16 ) lumineuse est reliée par un système ( 24 ) de fibre optique à une sortie et entrée ( 26 ) de lumière disposée dans la surface de référence.

**8.** Système ( 1, 1' ) de mesure suivant la revendication 7, dont le détecteur ( 20 ) est relié également par le système ( 24 ) de fibre optique à la sortie et entrée ( 26 ) de lumière.

**9.** Système ( 1, 1' ) de mesure suivant la revendication 7 ou 8, dont le système ( 24 ) de fibre optique est muni en partie d'un dispositif ( 28 ) à lentille, notamment d'une lentille convexe, dans la zone de la sortie et entrée ( 26 ) de lumière.

**10.** Système ( 1, 1' ) de mesure suivant l'une des revendications 7 à 9, dont le système ( 24 ) de fibre optique a un nombre de systèmes ( 52, 54, 56, 58 ) de faisceaux disposés dans une gaine ( 50 ) commune correspondant au nombre des faisceaux ( 10, 12, 40, 42, 44, 46 ) lumineux.

**11.** Utilisation d'un système ( 1, 1' ) de mesure suivant l'une des revendications 4 à 10 pour le contrôle de l'intervalle radial dans une turbine.

## FIG 1

## FIG 2

# FIG 3

# FIG 4